# EUROPÄISCHE PATENTSCHRIFT

(11) **EP 1 391 469 B1**
(45) Veröffentlichungstag und Bekanntmachung des Hinweises auf die Patenterteilung: **05.04.2006**
(21) Anmeldenummer: 03016675.5
(22) Anmeldetag: 01.08.2003
(51) Int. Cl.: C08F 8/44

(54) **Wässrige Bindemittel-Dispersionen als Überzugsmittel**
Aqueous binder dispersions as coating agents
Dispersions aqueuses de liant comme agents de revêtement

(30) Priorität: 16.08.2002 DE 10237576
(43) Veröffentlichungstag der Anmeldung: 25.02.2004
(73) Patentinhaber: Bayer MaterialScience AG, 51368 Leverkusen (DE)
(72) Erfinder: Melchiors, Martin, Dr., 42799 Leichlingen (DE); Freudenberg, Ulrich, Dr., 50259 Pulheim (DE); Reyer, Robert, 47918 Tönisvorst (DE); Pires, Raul, Dr., 50670 Köln (DE); Grosskopf, Sandra, 50181 Bedburg (DE)

(56) Entgegenhaltungen:
- EP-A- 0 705 853
- DE-A- 4 242 518
- DE-A- 4 407 415
- FR-A- 2 276 340
- GB-A- 1 023 281
- US-A- 5 317 063

## Beschreibung

Die Erfindung betrifft neue wässrige Bindemittel-Dispersionen, ein Verfahren zu deren Herstellung und ihre Verwendung als Überzugsmittel für hochwertige Beschichtungen.

Aus dem Stand der Technik ist bekannt, Dispersionen auf Basis von Copolymerisaten in wasserverdünnbaren Lacken und Beschichtungsmitteln einzusetzen. Wird ein hohes Qualitätsniveau, z.B. in Hinblick auf die Beständigkeit der Filme gegen Lösemittel oder Chemikalien angestrebt, so werden die Dispersionen mit vernetzbaren funktionellen Gruppen ausgestattet und vor Applikation mit einem Vernetzer, z.B. mit einem polyfunktionellen Isocyanat, gemischt. Wässrige Zweikomponenten-Polyurethan-Beschichtungen, enthaltend Dispersionen auf Basis von Copolymerisaten, die mit Isocyanaten vernetzbare Gruppen aufweisen, und polyfunktionelle Isocyanate, werden für solche Anforderungsprofile aufgrund ihres hohen Qualitätsniveaus zunehmend eingesetzt.

In der EP-A 557 844 werden wässrige Zweikomponenten-Polyurethan-Beschichtungen auf Basis von praktisch carboxylatgruppenfreien, durch externe Emulgatoren stabilisierten, hydroxyfunktionellen Emulsionscopolymerisaten und hydrophilen Polyisocyanaten beschrieben. Aufgrund der hohen Molgewichte der Polymeren und der bleibenden Hydrophilie bei Einsatz externer Emulgatoren weisen solche Beschichtungssysteme für einige Anwendungen Nachteile in der Wasserfestigkeit, Pigmentbenetzung und insbesondere bei der Filmoptik auf.

In der EP-A 358 979, der DE-A 42 262 70 sowie der EP-A 1 024 184 werden wässrige Zweikomponenten-Polyurethan-Reaktivsysteme auf Basis von Vinylpolymerisat-Sekundärdispersionen und Polyisocyanat-Vernetzern beschrieben, die bereits ein gutes Eigenschaftsniveau aufweisen. Die Vinylpolymerisate dienen dabei als Emulgator für die Polyisocyanate und verhindern dadurch die unerwünschte NCO-Wasser-Reaktion. Für manche Anwendungen sind jedoch Verbesserungen im Festkörpergehalt, in den Beständigkeitseigenschaften, insbesondere der Wasserfestigkeit, in der Filmhärte und bezüglich der Filmoptik wünschenswert.

In der DE-A 44 35 950, DE-A 44 07 415, DE-A 44 39 669 werden sowohl lösemittelhaltige wie auch wässrige Lacke beschrieben, bei denen sich durch die Mitverwendung cycloaliphatischer Monomere die Trocknung sowie Chemikalien- und/oder Wetterbeständigkeit der Beschichtungen verbessern lassen. Für viele Anwendungen ist aber eine weitere Verbesserung der Filmhärte und - bei Wasserlacken - insbesondere der Filmoptik (Glanz, Haze) wünschenswert.

Nachteile in der Filmoptik wie z.B. niedriger Glanz, höherer Glanzschleier, Verlaufsprobleme, lassen sich insbesondere dann beobachten, wenn sog. "hartmachende Monomere" verstärkt eingesetzt werden, d.h. solche Monomere, die als Homopolymer eine Glasübergangstemperatur T_{g} von größer 0°C aufweisen. Beispiele für "hartmachende" Monomere sind Styrol, Methylmethacrylat, n-, iso- oder tert.-Butylmethacrylat sowie cycloaliphatische (Meth)acrylsäureester. Ursache für diese Defizite in der Filmoptik ist die schwierige oder schlechte Einarbeitbarkeit bzw. Dispergierbarkeit der Polyisocyanat-Vernetzer in der Polyol-Dispersion, die zu einer heterogeneren Verteilung des Vernetzers im Bindennittel führt.

Aufgabe der vorliegenden Erfindung bestand in der Bereitstellung wässriger Bindemittel und der daraus resultierenden Beschichtungen mit verbesserter Filmhärte und Filmoptik, die die Nachteile des Standes der Technik nicht aufweisen.

Überraschenderweise wurde gefunden, dass wässrige Bindemittel-Dispersionen auf Basis säurefunktioneller Copolymerisate (P), die Struktureinheiten cycloaliphatischer Monomere eingebaut enthalten und zumindest anteilig Triethanolamin als Neutralisationsamin enthalten, diese Nachteile nicht mehr aufweisen. Die daraus resultierenden Beschichtungen zeigen bei sehr guter Filmoptik gleichzeitig sehr gute Härte und Beständigkeitseigenschaften, insbesondere Wasserfestigkeit.

Gegenstand der Erfindung sind somit wässrige Bindemittel-Dispersionen, enthaltend mindestens ein Carboxyl- und/oder Carboxylatgruppen aufweisendes Copolymer (P), wobei das Copolymer (P) Struktureinheiten carboxylfreier Acrylsäure- und/oder Methacrylsäureester mit cycloaliphatischer Struktur enthält und mindestens 25 mol-%, bevorzugt mindestens 40 mol-% der Carbonsäuregruppen des Copolymers (P) in der Dispersion mit Triethanolamin neutralisiert vorliegen.

Die den erfindungsgemäßen wässrigen Bindemittel-Dispersionen zugrundeliegenden Copolymere (P) werden durch radikalische Polymerisation olefinisch ungesättigter Monomere (M1) bis (M5) mit Radikal-Initiatoren in einem ein- oder mehrstufigen Verfahren hergestellt. Bevorzugt sind die Copolymere (P), hergestellt aus der Gruppe der Monomere (M) umfassend
- (M1): 10 bis 50 Gew.-%, bevorzugt 15 bis 40 Gew.-% cycloaliphatische Ester der Acrylsäure und/oder Methacrylsäure oder deren Mischungen,
- (M2): 20 bis 60 Gew.-%, bevorzugt 25 bis 50 Gew.-% hydroxyfunktionelle radikalisch polymerisierbare Monomere,
- (M3): 1 bis 5 Gew.-%, bevorzugt 1,5 bis 4 Gew.-% carboxylfunktionelle radikalisch polymerisierbare Monomere,
- (M4): 0 bis 10 Gew.-% Phosphat- /Phosphonatgruppen oder Sulfonsäure-/Sulfonatgruppen enthaltende radikalisch polymerisierbare Monomere und
- (M5): 10 bis 60 Gew.-%, bevorzugt 20 bis 50 Gew.-% hydroxy- und carboxylgruppenfreie (Meth)acrylsäureester mit C₁ bis C₁₈-Kohlenwasserstoffresten im Alkoholteil und/oder Vinylaromaten und/oder Vinylester,
wobei die Summen der Komponenten sich zu 100 Gew.-% addieren.

Im Sinne der vorliegenden Erfindung werden Acrylsäure oder Methacrylsäure auch als (Meth)acrylsäure definiert.

Als Monomere (M1) sind z.B. geeignet Cyclohexyl(meth)acrylat, mit Alkylgruppen am Ring substituierte Cyclohexyl(meth)acrylate, 4-tert.-Butylcyclohexyl(meth)acrylat, Norbornyl(meth)acrylat, Isobornyl(meth)acrylat, bevorzugt werden Isobornylacrylat und/oder Isobornylmethacrylat, besonders bevorzugt Isobornylmethacrylat eingesetzt. Es können auch Mischungen, enthaltend Isobornylacrylat und/oder Isobornylmethacrylat und andere Monomere (M1) eingesetzt werden. Die von Isobornylacrylat und/oder Isobornylmethacrylat verschiedenen Monomere können gegebenenfalls in Mengen von kleiner 10 Gew.-%, bezogen auf die Summe (M1) bis (M5), mitverwendet werden.

Geeignete hydroxyfunktionelle Monomere (M2) sind z.B. OH-funktionelle (Meth)-acrylsäureester mit C₁-C₁₈-Kohlenwasserstoffresten im Alkoholteil, wie beispielsweise Hydroxyethylmethacrylat, Hydroxypropylmethacrylat, Hydroxyethylacrylat, Hydroxypropylacrylat, Hydroxybutylacrylat oder Hydroxybutylmethacrylat. Ebenfalls geeignet sind Alkylenoxideinheiten enthaltende Hydroxymonomere, wie z.B. Additionsprodukte von Ethylenoxid, Propylenoxid oder Butylenoxid an (Meth)acrylsäure. Bevorzugt sind Hydroxyethylmediacrylat und Hydroxypropylmethacrylat.

Unter carboxyfunktionellen radikalisch polymerisierbaren Monomeren (M3) sind olefinisch ungesättigte Monomere mit Carbonsäure- oder CarbonsäureanhydridGruppen zu verstehen, wie z.B. Acrylsäure, Methacrylsäure, β-Carboxyethylacrylat, Crotonsäure, Fumarsäure, Maleinsäure(anhydrid), Itaconsäure oder Monoalkylester zweibasiger Säuren bzw. Anhydride wie z.B. Maleinsäuremonoalkylester. Bevorzugt werden Acrylsäure oder Methacrylsäure eingesetzt.

Optional können Monomere (M4) eingesetzt werden. In Frage kommen z.B. ungesättigte radikalisch polymerisierbare Verbindungen mit Phosphat- bzw. Phosphonatgruppen oder Sulfonsäure- bzw. Sulfonatgruppen, wie z.B. in der WO-A 00/39181 (S. 8 Z. 13 - S. 9 Z. 19) beschrieben. Bevorzugt ist 2-Acrylamido-2-methylpropansulfonsäure.

Geeignete Monomere (M5) sind z.B. hydroxy- und carboxylgruppenfreie (Meth)-acrylsäureester mit C₁-C₁₈-Kohlenwasserstoffresten im Alkoholteil, beispielsweise Ethylacryltat, n-Butylacrylat, iso-Butylacrylat, 2-Ethylhexylacrylat, Methylmethacrylat, Ethylmethacrylat, Butylmethacrylat oder 2-Ethylhexylmethacrylat. Ebenfalls geeignet sind Styrol, Vinyltoluol, α-Methylstyrol, Vinylester, Alkylenoxideinheiten enthaltende Vinylmonomere, wie z.B. Kondensationsprodukte von (Meth)acrylsäure mit Oligoalkylenoxidmonoalkylethern sowie Monomere mit weiteren funktionellen Gruppen, wie z.B. Epoxygruppen, Alkoxysilylgruppen, Harnstoffgruppen, Urethangruppen, Amidgruppen oder Nitrilgruppen. Auch di- oder höherfunktionelle (Meth)acrylatmonomere und/oder Vinylmonomere, wie z.B. Hexandioldi(meth)-acrylat können in Mengen von 0 bis 2 Gew.-%, bezogen auf die Summe der Monomere (M1) bis (M5), eingesetzt werden. Bevorzugt werden als Monomere (M5) Methylmethacrylat, n-Butylacrylat, n-Butylmethacrylat oder 2-Ethylhexylacrylat eingesetzt.

Ebenfalls Gegenstand der vorliegenden Erfindung ist ein Verfahren zur Herstellung der erfindungsgemäßen wässrigen Bindemittel-Dispersionen, dadurch gekennzeichnet, dass die Komponenten (M1), (M2), (M3) und (M5) und gegebenenfalls (M4) zu einem Copolymerisat (P) umgesetzt werden und das entstehende Säuregruppen aufweisende Copolymerisat (P) in die wässrige Phase überführt wird, wobei vor oder während der Dispergierung mindestens 25 mol-% der Carboxylgruppen mit Triethanolamin neutralisiert werden.

Die Herstellung des Copolymerisats (P) kann prinzipiell durch an sich bekannte radikalische Polymerisationsverfahren in organischer oder wässriger Phase durchgeführt werden. Bevorzugt erfolgt die Herstellung allerdings durch Polymerisation in organischer Phase mit anschließender Dispergierung des Harzes in die wässrige Phase, wobei die Säuregruppen vor oder während des Dispergiervorgangs des Harzes zumindest teilweise neutralisiert werden. Besonders bevorzugt ist es, zur Herstellung des Copolymerisats (P) ein mehrstufiges Polymerisationsverfahren, wie z.B. in der EP-A 0 947 557 (S. 3 Z. 2 - S. 4 Z. 15) oder in der EP-A 1 024 184 (S.2 Z. 53 - S. 4 Z. 9) beschrieben, einzusetzen. Dabei wird zunächst eine vergleichsweise hydrophobe säuregruppenarme oder -freie Monomermischung und dann, zu einem späteren Zeitpunkt der Polymerisation, eine hydrophilere, säuregruppenhaltige Monomermischung zudosiert.

Statt eines mehrstufigen Polymerisationsverfahren ist es ebenfalls möglich den Prozess kontinuierlich (Gradientenpolymerisation) durchzuführen, d.h. es wird eine Monomermischung mit sich ändernder Zusammensetzung zugegeben, wobei die hydrophilen (säurefunktionellen) Monomeranteile gegen Ende des Zulaufs höher sind als zu Beginn.

Die Polymerisation kann dabei in Gegenwart eines im Reaktionsgefäß vorgelegten Lösemittels oder Lösemittel/Wasser-Gemisches durchgeführt werden. Als geeignete organische Lösemittel kommen beliebige in der Lacktechnologie bekannte Lösemittel in Betracht, bevorzugt sind solche, die üblicherweise als Colöser in wässrigen Dispersionen eingesetzt werden, wie z.B. Alkohole, Ether, Ethergruppenhaltige Alkohole, Ester, Ketone, N-Methylpyrrolidon oder unpolare Kohlenwasserstoffe bzw. Gemische dieser Lösemittel. Die Lösemittel werden in solchen Mengen eingesetzt, dass ihr Gehalt in der fertigen Dispersion 0 bis 12 Gew.-%, bevorzugt 2 bis 10 Gew.% beträgt. Falls erforderlich können die eingesetzten Lösemittel auch durch eine Destillation wieder teilweise entfernt werden, wenn besonders niedrige Gehalte an organischen Lösemitteln gefordert werden.

Außerdem kann die Polymerisation auch in Gegenwart eines hydrophoben Copolymers oder auch in Gegenwart eines Polyesters, wie z.B. in der EP-A 543 228, Sp. 4, Z. 9 - 18 und Sp. 5, Z. 38 - Sp. 8 Z. 13 beschrieben, die mit Lösemittel bzw. Lösemittel/Wasser-Gemisch verdünnt sein können, durchgeführt werden. Gegenüber der radikalischen Polymerisation weniger reaktive Monomere können ebenfalls im Reaktionsgefäß vorgelegt werden, um deren Einbaugrad zu erhöhen.

Die Copolymerisation wird im Allgemeinen bei 40 bis 180°C, bevorzugt bei 80 bis 160°C durchgeführt.

Als Initiatoren für die Polymerisationsreaktion eignen sich organische Peroxide wie z.B. Di-tert.-Butylperoxid oder tert.-Butylperoxy-2-ethylhexanoat und Azoverbindungen. Die eingesetzten Initiatormengen hängen vom gewünschten Molekulargewicht ab. Aus Gründen der Prozesssicherheit und des leichteren Handlings können Peroxidinitiatoren auch als Lösung in geeigneten organischen Lösemitteln der o.g. Art eingesetzt werden.

Das zahlenmittlere Molekulargewicht Mₙ der Copolymerisate (P) kann durch gezielte Wahl der Prozessparameter, z.B. des molaren Monomer-Initiator-Verhältnisses, der Reaktionszeit oder der Temperatur gesteuert werden und liegt im Allgemeinen zwischen 500 und 30.000 g/mol, bevorzugt zwischen 1.000 und 15.000 g/mol, besonders bevorzugt zwischen 1.500 und 10.000 g/mol. Der OH-Gehalt der 100 %igen Copolymerisate (P) beträgt bevorzugt 3,5 bis 7,5 Gew.-%, besonders bevorzugt 3,8 bis 6 Gew.% und wird durch relative Menge der eingesetzten hydroxyfunktionellen Monomere sowie gegebenenfalls des vorgelegten hydrophoben Copolymers oder Polyesters bestimmt.

Der Gehalt an Säuregruppen des 100 %igen Copolymerisats (P), welcher die Summe Carboxyl-/Carboxylat-, Phosphat-/Phosphonat und Sulfonsäure-/Sulfonatgruppen bildet, beträgt 5 bis 100 meq-/100 g, bevorzugt 10 bis 80 meq./100 g und wird durch die relative Menge der eingesetzten säurefunktionellen Monomere (M3) und (M4) sowie gegebenenfalls durch geringe Mengen Säuregruppen in dem vorgelegten hydrophoben Copolymerisat oder Polyester bestimmt. Die Säurezahl des 100%igen Copolymerisats (P) beträgt bevorzugt 15 bis 40 mg KOH/g, besonders bevorzugt 18 bis 30 mg KOH/g. Gegebenenfalls kann das Copolymerisat (P) zur Hydrophilierung zusätzlich zu den Säuregruppen anteilig alkylenoxidhaltige Monomereinheiten in eingebauter Form oder auch externe Emulgatoren enthalten. Bevorzugt wird das Copolymerisat (P) aber nur durch Säuregruppen, besonders bevorzugt nur durch Carbonsäuregruppen (oder deren Anionen) hydrophiliert.

Erfindungsgemäß wird mindestens die für einen Neutralisationsgrad der Carboxylgruppen von 25 %, bevorzugt mindestens 40 % entsprechende Menge Triethanolamin eingesetzt. Optional können weitere Säuregruppen des Copolymers (P) mit einer anderen Base neutralisiert werden. Dazu geeignet sind organische Amine oder wasserlösliche anorganische Basen, wie z.B. lösliche Metallhydroxide. Beispiele für geeignete Amine sind N-Methylmorpholin, Triethylamin, Diiopropylethylamin, Dimethylethanolamin, Dimethylisopropanolamin, Methyldiethanolamin, Diethylethanolamin, Triethanolamin, Butanolamin, Morpholin, 2-Aminomethyl-2-methylpropanol oder Isophorondiamin. In Mischungen kann auch anteilig Ammoniak eingesetzt werden.

Die Neutralisationsamine werden in solchen Mengen zugesetzt, dass in Summe ein Neutralisationsgrad, d.h. das molare Verhältnis Neutralisationsmittel zu Säure, von 40 bis 1.50 %, bevorzugt 60 bis 120 % vorliegt. Der pH-Wert der erfludungsgemäßen wässrigen Bindemitteldispersion beträgt 6,0 bis 10,0, bevorzugt 6,5 bis 9,0.

Die erfindungsgemäßen wässrigen Bindemittel-Dispersionen weisen einen Festkörpergehalt von 25 bis 65 Gew.-%, bevorzugt 35 bis 60 Gew.-% sowie einen Gehalt an organischen Lösemitteln von 0 bis 12 Gew.%, bevorzugt 2 bis 10 Gew.-% auf.

Die erfindungsgemäßen Bindemittel-Dispersionen können neben dem Copolymerisat (P) gegebenenfalls auch andere Bindemittel oder Dispersionen, z.B. auf Basis von Polyestern, Polyurethanen, Polyethern, Polyepoxiden oder Polyacrylaten und gegebenenfalls Pigmente und sonstige in der Lackindustrie bekannten Hilfs- und Zusatzstoffe enthalten.

Die erfindungsgemäßen Bindemittel-Dispersionen können zu wässrigen Beschichtungsmitteln verarbeitet werden.

Gegenstand der vorliegenden Erfindung sind auch wässrige Beschichtungsmittel enthaltend die erfindungsgemäßen Bindemittel-Dispersionen sowie mindestens einen Vernetzer, bevorzugt ein Polyisocyanat-Vernetzer, besonders bevorzugt ein Polyisocyanat-Vernetzer mit freien NCO-Gruppen.

Durch Kombination mit Vernetzern können dabei, je nach Reaktivität oder gegebenenfalls Blockierung der Vernetzer, sowohl Einkomponentenlacke als auch Zweikomponentenlacke hergestellt werden. Unter Einkomponentenlacken im Sinne der vorliegenden Erfindung sind dabei Überzugsmittel zu verstehen, bei denen Bindemittelkomponente und Vernetzerkomponente zusammen gelagert werden können, ohne dass eine Vernetzungsreaktion in merklichen bzw. für die spätere Applikation schädlichen Ausmaß stattfindet. Die Vernetzungsreaktion findet erst bei Applikation nach einer Aktivierung des Vernetzers statt. Diese Aktivierung kann z.B. durch Temperatursteigerung bewirkt werden. Unter Zweikomponentenlacken im Sinne der vorliegenden Erfindung versteht man Überzugsmittel, bei denen Bindemittelkomponente und Vernetzerkomponente aufgrund ihrer hohen Reaktivität in getrennten Gefäßen gelagert werden müssen. Die beiden Komponenten werden erst kurz vor Applikation gemischt und reagieren dann im Allgemeinen ohne zusätzliche Aktivierung. Zur Beschleunigung der Vernetzungsreaktion können aber auch Katalysatoren eingesetzt oder höhere Temperaturen angewendet werden.

Geeignete Vernetzer sind beispielsweise Polyisocyanat-Vernetzer, Amid- und Amin-Formaldehydharze, Phenolharze, Aldehyd- und Ketonharze, wie z.B. Phenol-Formaldehydharze, Resole, Furanharze, Harnstoffharze, Carbamidsäureesterharze, Triazinharze, Melaminharze, Benzoguanaminharze, Cyanamidharze, Anilinharze, wie sie in "Lackkunstharze", H. Wagner, H.F. Sarx, Carl Hanser Verlag München, 1971, beschrieben sind.

Bevorzugt werden als Vernetzer Polyisocyanate mit freien und/oder blockierten NCO-Gruppen eingesetzt. Geeignete blockierte Polyisocyanate sind beispielsweise solche auf Basis von Isophorondiisocyanat, Hexamethylendiisocyanat, 1,4-Diisocyanatocyclohexan, Bis-(4-isocyanatocyclohexan)-methan oder 1,3-Diisocyanatobenzol oder auf Basis von Lackpolyisocyanaten wie Biuret- oder Isocyanuratgruppen aufweisende Polyisocyanate von 1,6-Diisocyanatohexan, Isophorondiisocyanat oder Bis-(4-isocyanatocyclohexan)-methan oder Urethangruppen aufweisenden Lackpolyisocyanaten auf Basis von 2,4- und/oder 2,6-Diisocyanatotoluol oder Isophorondiisocyanat einerseits und niedermolekularen Polyhydroxylverbindungen wie Trimethylolpropan, den isomeren Propandiolen oder Butandiolen oder beliebigen Gemischen derartigen Polyhydroxylverbindungen andererseits.

Geeignete Blockierungsmittel für diese Polyisocyanate sind beispielsweise einwertige Alkohole wie Methanol, Ethanol, Butanol, Hexanol, Cyclohexanol, Benzylalkohol, Oxime wie Acetoxim, Methylethylketoxim, Cyclohexanonoxim, Lactame wie ε-Caprolactam, Phenole, Amine wie Diisopropylamin oder Dibutylamin, Dimethylpyrazol oder Triazol sowie Malonsäuredimethylester, Malonsäurediethylester oder Malonsäuredibutylester.

Besonders bevorzugt ist der Einsatz niedrigviskoser, hydrophober oder hydrophilierter Polyisocyanate mit freien Isocyanatgruppen auf Basis aliphatischer, cycloaliphatischer, araliphatischer und/oder aromatischer Isocyanate, ganz besonders bevorzugt aliphatischer oder cycloaliphatischer Isocyanate, da sich so ein besonders hohes Beständigkeitsniveau des Lackfilms erreichen lässt. Diese Polyisocyanate weisen bei 23°C im Allgemeinen eine Viskosität von 10 bis 5000 mPas auf. Falls erforderlich, können die Polyisocyanate in Abmischung mit geringen Mengen an inerten Lösemitteln zum Einsatz gelangen, um die Viskosität auf einen Wert innerhalb des genannten Bereiches abzusenken. Auch Triisocyanatononan kann allein oder in Mischungen als Vernetzerkomponente eingesetzt werden.

Das Copolymerisat (P) ist im Allgemeinen ausreichend hydrophil, so dass auch hydrophobe Vernetzerharze dispergiert werden können.

Wasserlösliche oder dispergierbare Polyisocyanate sind z.B. durch Modifikation mit Carboxylat-, Sulfonat- und/oder Polyethylenoxidgruppen und/oder Polyethylenoxid/Polypropylenoxidgruppen erhältlich. Eine Hydrophilierung der Polyisocyanate ist z.B. durch Umsetzung mit unterschüssigen Mengen an einwertigen, hydrophilen Polyetheralkoholen möglich. Die Herstellung derartiger hydrophilierter Polyisocyanate ist beispielsweise in der EP-A 0 540 985 (S. 3, Z 55 bis S. 4 Z. 5) beschrieben. Gut geeignet sind auch die in der EP-A 959 087 (S. 3 Z. 39 bis 51) beschriebenen Allophanatgruppen enthaltenden Polyisocyanate, die durch Umsetzung monomerenarmer Polyisocyanate mit Polyethylenoxidpolyetheralkoholen unter Allophanatisierungsbedingungen hergestellt werden. Auch die in der DE-A 100 078 21 (S. 2 Z. 66 bis S. 3 Z. 5) beschriebenen wasserdispergierbaren Polyisocyanatgemische auf Basis von Triisocyanatononan sind geeignet, sowie mit ionischen Gruppen (Sulfonat-, Phosphonatgruppen) hydrophilierte Polyisocyanate, wie sie z.B. in der DE-A 100 24 624 (S. 3 Z. 13 bis 33) beschrieben sind. Ebenso möglich ist die Hydrophilierung durch Zusatz handelsüblicher Emulgatoren.

Prinzipiell ist natürlich auch der Einsatz von Mischungen verschiedener Vernetzerharze möglich.

Vor, während oder nach der Herstellung der erfindungsgemäßen wässrigen Bindemittel-Dispersion können die üblichen Hilfs- und Zusatzmittel der Lacktechnologie zugesetzt werden, wie z.B. Entschäumungsmittel, Verdickungsmittel, Pigmente, Dispergierhilfsmittel, Katalysatoren, Hautverhinderungsmittel, Antiabsetzmittel oder Emulgatoren.

Diese Hilfs- und Zusatzmittel können auch dem Beschichtungsmittel, enthaltend die erfindungsgemäßen wässrigen Bindemittel-Dispersionen, zugesetzt werden.

Die wässrigen Beschichtungsmittel, enthaltend die erfindungsgemäßen Bindemittel-Dispersionen, eignen sich für alle Einsatzgebiete in denen wässrige Anstrich- und Beschichtungssysteme mit hohen Anforderungen an die Beständigkeit der Filme Verwendung finden, z.B. für die Beschichtung mineralischer Baustoff-Oberflächen, Lackierung und Versiegelung von Holz und Holzwerkstoffen, Beschichtung metallischer Oberflächen (Metallbeschichtung), Beschichtung und Lackierung asphalt- oder bitumenhaltiger Beläge, Lackierung und Versiegelung diverser Kunststoffoberflächen (Kunststoffbeschichtung) sowie Hochglanzlacke.

Gegenstand der Erfindung ist auch die Verwendung der erfindungsgemäßen wässrigen Beschichtungsmittel für die Lackierung von Substraten, bevorzugt zur Lackierung von metallischen Oberflächen und Kunststoffen sowie derart beschichtete Substrate.

Die wässrigen Beschichtungsmittel, enthaltend die erfindungsgemäßen Bindemittel-Dispersionen, werden zur Herstellung von Grundierungen, Füller, pigmentierte oder transparente Decklacke, Klarlacke und Hochglanzlacke sowie Einschichtlacke, die in der Einzel- und Serienapplikation, z.B. im Bereich der Industrielackierung, Automobil-Erst- und -Reparaturlackierung Anwendung finden können, eingesetzt.

Es ist bevorzugt die wässrigen Beschichtungsmittel, enthaltend die erfindungsgemäßen Bindemittel-Dispersionen für die Beschichtung bzw. Lackierung metallischer Oberflächen oder von Kunststoffen bei Raumtemperatur bis 140°C zu verwenden. Als Vernetzer werden bevorzugt aliphatische Polyisocyanate eingesetzt. Diese Beschichtungen weisen bei sehr guter Filmoptik ein hohes Niveau in Lösemittel- und Chemikalienbeständigkeit, gute Wetterbeständigkeit, hohe Härte und schnelle Trocknung auf.

Die Herstellung der Beschichtungen kann nach den unterschiedlichen Spritzverfahren wie beispielsweise Luftdruck-, Airless- oder Elektrostatik-Spritzverfahren unter Verwendung von Ein- oder gegebenenfalls Zweikomponenten-Spritzanlagen erfolgen.

Die Lacke und Beschichtungsmittel, enthaltend die erfindungsgemäßen Bindemittel-Dispersionen, können jedoch auch nach anderen Methoden, beispielsweise durch Streichen, Rollen oder Rakeln appliziert werden.

Gegenstand der vorliegenden Erfindung sind auch Substrate, beschichtet mit Beschichtungsmitteln, enthaltend mindestens eine erfindungsgemäße Bindemittel-Dispersion.

### Beispiele

Alle Angaben in % beziehen sich - soweit nicht anders vermerkt - auf das Gewicht. Viskositätsmessungen wurden in einem Kegel-Platte-Viskosimeter nach DIN 53019 bei einem Schergefälle von 40 s⁻¹ durchgerührt.

Die mittleren Teilchengrößen der Dispersionen wurden über Laserkorellationsspektroskopie mit einem Zetasizer® 1000 der Firma Malvern Instruments, GB bestimmt.

### Beispiel 1 (erfindungsgemäß)

In einem 15 1-Reaktionsgefäß mit Rühr-, Kühl- und Heizvorrichtung wurden 2100 g eines hydrophoben Polyacrylatharzes (Desmophen® A 160, Bayer AG, Leverkusen, Deutschland), 60 %ig gelöst in Solvent Naphtha® 100 (Fa. Exxon-Chemie, Esso Deutschland GmbH, DE) mit einem OH-Gehalt (100 %ig) von 2,6 %, einer Säurezahl (100 %ig) von 5 mg KOH/g und einem mittleren Molekulargewicht Mₙ von 4800 g/mol, zusammen mit 735 g Propylenglykol-n-Butylether vorgelegt und auf 138°C aufgeheizt Bei dieser Temperatur gab man eine Lösung aus 33 g *Di-tert-*butylperoxid in 33 g Propylenglykol-n-Butylether in 20 min zu. Im Anschluss daran dosierte man eine Monomermischung aus 594 g Methylmethacrylat, 724 g Butylmethacrylat, 171 g Butylacrylat, 892 g Isobornylmethacrylat und 1035 g Hydroxyethylmethacrylat sowie parallel dazu eine Lösung von 53 g *Di-tert.-*butylperoxid in 53 g Propylenglykol-n-Butylether bei dieser Temperatur innerhalb von 3 Stunden gleichmäßig zu. Man hielt 10 min bei dieser Temperatur und dosierte anschließend eine Lösung von 80 g Di-*tert*-butylperoxid in 80 g Propylenglykol-n-Butylether innerhalb von 1 Stunde 50 min sowie 20 min nach Beginn dieser Peroxiddosierung eine Monomermischung aus 594 g Methylmethacrylat, 724 g Butylmethacrylat, 171 g Butylacrylat, 892 g Isobornylmethacrylat und 1035 g Hydroxyethylmethacrylat parallel bei dieser Temperatur innerhalb von 1 Stunden 30 min gleichmäßig zu, so dass Peroxid- und Monomerdosierung zeitgleich beendet waren. Man hielt die Mischung 30 min bei 138°C und dosierte anschließend eine Mischung aus 520 g Methylmethacrylat, 408 g Butylacrylat, 734 g Hydroxyethylmethacrylat und 245 g Acrylsäure sowie parallel dazu eine Lösung von 33 g Di-*tert*-butylperoxid in 60 g Solvent Naphtha® 100 in 90 min zu. Nach einer weiteren Stunde Rühren bei 138°C wurde die Polymerlösung abgekühlt.

In einem Dispergierkessel wurden dann 1551 g der obigen Polymerlösung auf 90°C bis 100°C aufgeheizt, 68,8 g Triethanolamin zugegeben, homogenisiert und mit 1350 g Wasser dispergiert. Es wurde ein in Wasser dispergiert vorliegendes Copolymerisat (P) mit folgenden Daten erhalten:

| | |
|---|---|
| OH-Gehalt (100 %ig) = | 3,9 %, |
| Säurezahl (100 %ig) = | 22 mg KOH/g, |
| Festkörpergehalt = | 46,5 %, |
| Viskosität = | ca.1700 mPas (23°C, Schergefälle 40 s⁻¹), |
| pH-Wert (10 %ig in Wasser) = | 7,5, |
| Neutralisationsgrad = | 105 %. |

Die Dispersion weist eine mittlere Teilchengröße von ca. 150 nm auf.

### Beispiel 2 (nicht erfindungsgemäß)

Es wurde wie in Beispiel 1 verfahren, mit dem Unterschied, dass in diesem Fall 2893 g der Polymerlösung bei 90°C bis 100°C mit 76,6 g Dimethylethanolamin neutralisiert und homogenisiert wurden. Die zur Dispergierung und Viskositätseinstellung notwendige Wassermenge betrug hier ca. 2740 g. Es wurde ein in Wasser dispergiert vorliegendes Copolymerisat (P) mit folgenden Daten erhalten:

| | |
|---|---|
| OH-Gehalt (100 %ig) = | 3,9 % |
| Säurezahl (100 %ig) = | 22 mg KOH/g, |
| Festkörpergehalt = | 43,2 %, |
| Viskosität = | ca.1450 mPas (23°C, Schergefälle 40 s⁻¹), |
| pH-Wert (10 %ig in Wasser) = | 8,1, |
| Neutralisationsgrad = | 105 %. |

Die Dispersion weist eine mittlere Teilchengröße von ca.130 nm auf.

### Anwendungsbeispiele

### Eingesetzte Produkte:

- Surfynol® 104 E:: Entschäumendes Netzmittel, Air Products, vertreten durch W. Biesterfeld&Co., Hamburg, DE
- Tronox® R-KB-4:: Titandioxid-Pigment, Kerr McGee Pigments GmbH&Co. KG, DE
- Acrysol® RM 8:: 20%ig in Ethanol, Verdicker, Rohm&Haas Deutschland GmbH, Frankfurt/Main, DE
- Byk® 346: Verlaufsadditiv/Untergrundbenetzung, Byk Chemie, Wesel, DE
- Byk® 380: Verlaufsadditiv/Antikratermittel, Byk Chemie, Wesel, DE
- Bayhydur® VP LS 2319: Hydrophiliertes, aliphatisches Polyisocyanat 80%ig in Methoxypropylacetat, Bayer AG Leverkusen, DE
- Surfynol® 104 BC: Entschäumendes Netzmittel, Air Products, vertreten durch W. Biesterfeld&Co., Hamburg, DE
- Bayhydur® 3100: hydrophiliertes aliphatisches Polyisocyanat, Bayer AG, Leverkusen
- Desmodur® N 3600: aliphatisches Polyisocyanat, Bayer AG, Leverkusen.

### Beispiel 3: Herstellung pigmentierter Decklacke (Tabelle 1)

220 g Bindemittel-Dispersion aus Beispiel 1, 5,4 g Surfynol® 104, 36 g dest. Wasser, 200,1g Titandioxid (Tronox® R-KB-4) wurden in einem Schüttler angerieben. 150 g des so erhaltenen Mahlguts wurden mit 32,6 g Dispersion aus Bsp. 1, 0,45 g Byk® 346, 0,68 g Byk® 380, 1,2 g Acrysol® RM8, 18,1 g Desmodur®. N 3600 und 24,7 g Bayhydur® 3100 in einem Dissolver vermischt und mit ca. 53 g dest. Wasser auf eine Viskosität von ca. 30 Sekunden bei 23°C im DIN 4 Auslaufbecher eingestellt. Der pH-Wert lag bei 7,6; das NCO:OH-Verhältnis betrug 1,5:1.

In gleicher Weise wurden 220 g Bindemittel-Dispersion aus Beispiel 2 mit 5,1 g Surfynol® 104, 32,4 g dest. Wasser, 191,3 g Titandioxid (Tronox® R-KB-4) in einem Schüttler angerieben. 150 g des so erhaltenen Mahlguts wurden mit 33,5 g Dispersion aus Bsp. 1, 0,45 g Byk® 346, 0,68 g Byk® 380, 1,2 g Acrysol® RM8, 17,9 g Desmodur® N 3600 und 24,3 g Bayhydur 3100 in einem Dissolver vermischt und mit ca. 49 g dest. Wasser auf eine Viskosität von ca. 30 Sekunden bei 23°C im DIN 4 Auslaufbecher eingestellt. Der pH-Wert lag bei 8,3; das NCO:OH-Verhältnis betrug 1,5:1.

Nach Applikation der beiden Lacke auf entfettete Stahlbleche wurden die Lackfilme bei Raumtemperatur getrocknet. Kenndaten und Prüfergebnisse der Lacke siehe Tabelle 1.

### Tabelle 1:

Kenndaten und Eigenschaften der wässrigen 2K-PUR-Weißlacke gemäß Beispiel 3

| **Bindemittel Bsp.** | **1** | **2 (Vgl.)** |
|---|---|---|
| Gehalt des Copolymers (P) an Isobornylmethacrylat | 17,5 % | 17,5 % |
| Neutralisationsamin | TEAOH* | DMEA* |
| Neutralisationsgrad | 105 % | 105 % |
| OH-Gehalt | 3,9 % | 3,9 % |
| Säurezahl | 22 | 22 |
| *Anwendungstechnische Prüfung* | | |
| Glanz (20°-Winkel) | 71 | 66 |
| Trocknung staubfr./ klebfr. [h] | 1/5 | 1/5 |
| Pendelhärte [s] | 157 | 144 |
| Wasserfestigkeit** | > 14 | 7 |
| Lösemittelbeständigkeit Aceton/Xylol*** | 1/0 | 1/0 |

| | | |
|---|---|---|
| *: TEAOH = Triethanolamin; DMEA = Dimethylethanolamin | | |
| **: erster Befund (Blasen, Glanzverlust nach x Tagen) | | |
| ***: Belastung 5 min; 0 = keine Schädigung; 5 = Lack abgelöst | | |

Man erkennt aus den Werten in Tabelle 1, dass der Lack basierend auf der erfindungsgemäßen Dispersion aus Bsp. 1 dem nicht erfindungsgemäßen Vergleichslack bei sehr guter Härte und Lösemittelbeständigkeit in der Wasserfestigkeit und der Filmoptik deutlich überlegen ist.

### Beispiel 4 (erfindungsgemäß)

In einem 6 1-Reaktionsgefäß mit Rühr-, Kühl- und Heizvorrichtung wurden 250 g (1,1 mol) Cardura® E 10 (Versaticsäureglycidylester, Resolution Deutschland GmbH, Eschborn), zusammen mit 180 g Propylenglykol-n-Butylether und 200 g Solvent Naphtha® (Fa. Exxon Chemie, Esso Deutschland GmbH, DE) 100 vorgelegt und auf 138°C aufgeheizt. Bei dieser Temperatur gab man eine Lösung aus 8 g Di-*tert*-butylperoxid in 8 g Propylenglykol-n-Butylether innerhalb 20 min zu. Im Anschluss daran dosierte man eine. Monomennischung aus 145,5 g Methylmethacrylat, 204,8 g Butylmethacrylat, 42 g Butylacrylat, 218,7 g Isobornylmethacrylat, 220 g Hydroxyethylmethacrylat und 72 g (1,0 mol) Acrylsäure sowie parallel dazu eine Lösung von 13 g Di-*tert*-butylperoxid in 13 g Propylenglykol-n-Butylether bei dieser Temperatur innerhalb von 3 Stunden gleichmäßig zu. Man hielt ca. 3 Stunden bei dieser Temperatur, bis eine Säurezahl kleiner 3 erreicht war. Die hier eingesetzte Acrylsäure trägt nicht zur Hydrophilierung bei, sondern wird komplett mit Cardura® E 10 zum Hydroxyester umgesetzt. Anschließend wurde eine Lösung von 19,5 g Di-*tert*.-butylperoxid in 19,5 g Propylenglykol-n-Butylether innerhalb von 1 Stunde 50 min sowie 20 min nach Beginn dieser Peroxiddosierung eine Monomermischung aus 145,5 g Methylmethacrylat, 204,7 g Butylmethacrylat, 42 g Butylacrylat, 218,8 g Isobornylmethacrylat und 220 g Hydroxyethylmethacrylat parallel bei dieser Temperatur innerhalb von 1 Stunden 30 min gleichmäßig zudosiert, so dass Peroxid- und Monomerdosierung zeitgleich beendet waren. Man hielt die Mischung 30 min bei 138°C und dosierte anschließend eine Mischung aus 127,5g Methylmethacrylat, 100 g Butylacrylat, 180 g Hydroxyethylmethacrylat und 53,7 g Acrylsäure sowie parallel dazu eine Lösung von 8 g Di-*tert*-butylperoxid in 20,6 g Solvent Naphtha® 100 in 90 min zu. Nach einer weiteren Stunde Rühren bei 138°C kühlte man die Polymerlösung auf 90 bis 100°C ab, gab 130,4 g Triethanolamin zu, homogenisierte und dispergiert mit 2700 g Wasser. Es wurde ein in Wasser dispergiert vorliegendes Copolymerisat (P) mit folgenden Daten erhalten:

| | |
|---|---|
| OH-Gehalt (100 %ig) = | 3,9 %, |
| Säurezahl (100 %ig) = | 21 mg KOH/g, |
| Festkörpergehalt = | 46,0 %, |
| Viskosität = | ca.1500 mPas (23°C, Schergefälle 40 s⁻¹), |
| pH-Wert (10 %ig in Wasser) = | 7,3, |
| Neutralisationsgrad = | 105 %. |

Die Dispersion weist eine mittlere Teilchengröße von ca. 130 nm auf.

### Beispiel 5 (erfindungsgemäß)

In einem 15 1-Reaktionsgefäß mit Rühr-, Kühl- und Heizvorrichtung wurden 2100 g eines hydrophoben Polyacrylatharzes (Desmophen® A 160, Bayer AG, Leverkusen, DE), 60 %ig gelöst in Solvent Naphtha® 100 (Fa. Exxon Chemie, Esso Deutschland GmbH, DE), mit einem OH-Gehalt (100 %ig) von 2,6%, einer Säurezahl (100 %ig) von 5 mg KOH/g und einem mittleren Molekulargewicht Mₙ von 4800 g/mol, zusammen mit 735 g Propylenglykol-n-Butylether vorgelegt und auf 142°C aufgeheizt. Bei dieser Temperatur gab man eine Lösung aus 33 g Di*-tert-*butylperoxid in 33 g Propylenglykol-n-Butylether in 20 min zu. Im Anschluss daran dosierte man eine Monomermischung aus 594 g Methylmethacrylat, 724 g Butylmethacrylat, 171 g Butylacrylat, 892 g Isobornylmethacrylat und 1035 g Hydroxyethylmethacrylat sowie parallel dazu eine Lösung von 53 g Di-*tert*-butylperoxid in 53 g Propylenglykol-n-Butylether bei dieser Temperatur innerhalb von 3 Stunden gleichmäßig zu. Man hielt 10 min bei dieser Temperatur und dosierte anschließend eine Lösung von 80 g Di-*tert*-butylperoxid in 80 g Propylenglykol-n-Butylether innerhalb von 1 Stunde 50 min sowie 20 min nach Beginn dieser Peroxiddosierung eine Monomermischung aus 594 g Methylmethacrylat, 724 g Butylmethacrylat, 172 g Butylacrylat, 892 g Isobornylmethacrylat und 1035 g Hydroxyethylmethacrylat parallel bei dieser Temperatur innerhalb von 1 Stunden 30 min gleichmäßig zu, so dass Peroxid- und Monomerdosierung zeitgleich beendet waren. Man hielt die Mischung 30 min bei 142°C und dosierte anschließend eine Mischung aus 459 g Methylmethacrylat, 408 g Butylacrylat, 734 g Hydroxyethylmethacrylat und 306 g Acrylsäure sowie parallel dazu eine Lösung von 33 g Di-*tert*-butylperoxid in 60 g Solvent Naphtha® 100 in 90 min zu. Nach einer weiteren Stunde Rühren bei 142°C wurde die Polymerlösung abgekühlt.

In einem Dispergierkessel wurden dann 3037 g der obigen Polymerlösung auf 90° bis 100°C aufgeheizt, eine Mischung (1 : 1 molar) aus 84,1 g Triethanolamin und 50,3 g Dimethylethanolamin zugegeben, homogenisiert und mit 2675 g Wasser dispergiert. Es wurde ein in Wasser dispergiert vorliegendes Copolymerisat (P) mit folgenden Daten erhalten:

| | |
|---|---|
| OH-Gehalt (100 %ig) = | 3,9 %, |
| Säurezahl (100 %ig) = | 24 mg KOH/g, |
| Festkörpergehalt = | 44,7 %, |
| Viskosität = | ca. 2300 mPas (23°C, Schergefälle 40 s⁻¹), |
| pH-Wert (10 %ig in Wasser) = | 7,7, |
| Neutralisationsgrad = | 105 %. |

Die Dispersion weist eine mittlere Teilchengröße von ca. 130 nm auf.

### Beispiel 6 (erfindungsgemäß)

In einem 15 1-Reaktionsgefäß mit Rühr-, Kühl- und Heizvorrichtung wurden 1550 g Propylenglykol-n-Butylether vorgelegt und auf 142°C aufgeheizt. Bei dieser Temperatur gab man eine Lösung aus 33 g Di-*tert*-butylperoxid in 33 g Propylenglykol-n-Butylether in 20 min zu. Im Anschluss daran dosierte man eine Monomermischung aus 608 g Methylmethacrylat, 724 g Butylmethacrylat, 361 g Butylacrylat, 892 g Isobornylmethacrylat, 287 g Styrol und 1158 g Hydroxyethylmethacrylat sowie parallel dazu eine Lösung von 63 g Di-*tert-*butylperoxid in 63 g Propylenglykol-n-Butylether bei dieser Temperatur innerhalb von 3 Stunden gleichmäßig zu. Man hielt 10 min bei dieser Temperatur und dosierte anschließend eine Lösung von 94 g Di-*tert*-butylperoxid in 94 g Propylenglykol-n-Butylether innerhalb von 1 Stunde 50 min sowie 20 min nach Beginn dieser Peroxiddosierung eine Monomermischung aus 608 g Methylmethacrylat, 724 g Butylmethacrylat, 361 g Butylacrylat, 892 g Isobornylmethacrylat, 287 g Styrol und 1158 g Hydroxyethylmethacrylat parallel bei dieser Temperatur innerhalb von 1 Stunden 30 min gleichmäßig zu, so dass Peroxid- und Monomerdosierung zeitgleich beendet waren. Man hält die Mischung 30 min bei 142°C und dosierte anschließend eine Mischung aus 459 g Methylmethacrylat, 408 g Butylacrylat, 734 g Hydroxyethylmethacrylat und 316 g Acrylsäure sowie parallel dazu eine Lösung von 33 g Di*-tert* butylperoxid in 60 g Solvent Naphtha® 100 (Fa. Exxon Chemie, Esso Deutschland GmbH, DE) in 90 min zu. Nach einer weiteren Stunde Rühren bei 142°C wurde die Polymerlösung abgekühlt.

In einem Dispergierkessel wurden dann 3071 g der obigen Polymerlösung auf 90° bis 100°C aufgeheizt, eine Mischung (1 : 1 molar) aus 87,9 g Triethanolamin und 52,5 g Dimethylethanolamin zugegeben, homogenisiert und mit 2750 g Wasser dispergiert. Es wurde ein in Wasser dispergiert vorliegendes Copolymerisat (P) mit folgenden Daten erhalten:

| | |
|---|---|
| OH-Gehalt (100 %ig) = | 3,9 %, |
| Säurezahl (100 %ig) = | 23 mg KOH/g, |
| Festkörpergehalt = | 45,4 %, |
| Viskosität = | ca. 1700 mPas (23°C, Schergefälle 40 s⁻¹), |
| pH-Wert (10 %ig in Wasser) = | 7,7, |
| Neutralisationsgrad = | 105 %. |

Die Dispersion weist eine mittlere Teilchengröße von ca. 125 nm auf.

### Beispiel 7 (nicht erfindungsgemäß)

In einem 6 1-Reaktionsgefäß mit Rühr-, Kühl- und Heizvorrichtung wurden 515 g eines hydrophoben Polyacrylatharzes (Desmophen® A 160, Bayer AG, Leverkusen, DE), 60 %ig gelöst in Solvent Naphtha® 100 (Fa. Exxon Chemie, Esso Deutschland GmbH, DE), mit einem OH-Gehalt (100 %ig) von 2,6 %, einer Säurezahl (100 %ig) von 5 mg KOH/g und einem mittleren Molekulargewicht Mₙ von 4800 g/mol, zusammen mit 172 g Butylglykol vorgelegt und auf 138°C aufgeheizt. Bei dieser Temperatur gab man eine Lösung aus 8 g Di-*tert*-butylperoxid in 8 g Butylglykol in 20 min zu. Im Anschluss daran dosierte man eine Mischung aus 784 g Methylmethacrylat, 503 g Butylacrylat und 390 g Hydroxyethylmethacrylat sowie parallel dazu eine Lösung von 32,5 g Di-*tert*-butylperoxid in 35 g Butylglykol bei dieser Temperatur innerhalb von 4 h zu. Man hielt die Mischung 30 min bei 138°C und dosierte anschließend eine Mischung aus 128 g Methylmethacrylat, 100 g Butylacrylat, 180 g Hydroxyethylmethacrylat und 58 g Acrylsäure sowie parallel dazu eine Lösung von 8 g Di-*tert*-butylperoxid in 20 g Butylglykol innnerhalb 90 min zu. Nach einer weiteren Stunde Rühren bei 138°C wurde auf 90°C abgekühlt, 78 g Dimethylethanolamin zugegeben, homogenisiert und in 2300 g Wasser dispergiert. Es wurde ein in Wasser dispergiert vorliegendes Copolymerisat (P) mit folgenden Daten erhalten:

| | |
|---|---|
| OH-Gehalt (100 %ig) = | 3,3 %, |
| Säurezahl (100 %ig) = | 20 mg KOH/g, |
| Festkörpergehalt = | 47 %, |
| Viskosität = | ca.1500 mPas (23°C, Schergefälle 40 s⁻¹), |
| pH-Wert (10 %ig in Wasser) = | 8,5, |
| Neutralisationsgrad = | 105 %. |

Die Dispersion weist eine mittlere Teilchengröße von ca.120 nm auf.

### Anwendungsbeispiele:

### Beispiel 8 Herstellung pigmentierter Decklacke (Tabelle 2)

Entsprechend dem Vorgehen in Beispiel 3 wurden pigmentierte Decklacke mit den Bindemitteldispersionen der Beispiele 5, 6 und 7 formuliert und appliziert. Tabelle 2 zeigt die Einwaagemengen und die erhaltenen Prüfergebnisse:

**Tabelle 2 Kenndaten, Formulierung und Eigenschaften der wässrigen 2K-PUR-Weißlacke gemäB Beispiel 8**

| **Bindemittel Bsp.** | **5** | **6** | **7 (Vergl.)** |
|---|---|---|---|
| Gehalt des Copolymers (P) an Isobornylmethacrylat | 17,5 % | 17,5 % -- | |
| Neutralisationsamin | TEAOH/DMEA 1: 1* | TEAOH/DMEA 1:1* | DMEA* |
| Neutralisationsgrad | 105% | 105% | 105 % |
| OH-Gehalt des Copolymers (P) | 3,9 % | 3,9 % | 3,3 % |
| Säurezahl d. Copolymers (P) | 24 | 23 | 20 |
| ***Lackformulierung (Einwaagen in g)*** | | | |
| **Herstellung des Mahlguts:** | | | |
| Bindemittel-Dispersion | 220 | 220 | 220 |
| Surfynol® 104 | 6 | 5 | 5 |
| Tronox® R-KB-4 | 208 | 202 | 186 |
| demin. Wasser | 27 | 29 | 30 |
| Auflackung und Vernetzung: | | | |
| Mahlgut | 150 | 150 | 150 |
| Bindemittel-Dispersion | 30 | 29 | 30 |
| Acrysol® RM8 (20%ig in Ethanol) | 1,22 | 1,21 | 1,16 |
| Byk® 346 | 0,47 | 0,47 | 0,44 |
| Byk® 380 | 0,70 | 0,70 | 0,67 |
| Bayhydur® VP LS 2319 | 47 | 46 | 40 |
| demin. Wasser | 59 | 48 | 45 |
| *Lacktechnische Eigenschaften* | | | |
| Glanz (20°-Winkel) | 78 | 78 | 78 |
| Trocknung staubfr./klebfr. [h] | 0,5 / 6 | 1/6 | 1/6 |
| Pendelhärte [s] | 139 | 122 | 87 |
| Wasserfestigkeit** | > 14 | > 14 | 4 |
| Lösemittelbeständigkeit Aceton/Xylol*** | 1/0 | 2 / 0 | 4/1 |

| | | | |
|---|---|---|---|
| *: TEAOH = Triethanolamin; DMEA = Dimethylethanolamin | | | |
| **: erster Befund (Blasen, Glanzverlust nach x Tagen) | | | |
| ***: Belastung 5 min; 0 = keine Schädigung; 5 = Lack abgelöst | | | |

Man erkennt aus den Werten in Tabelle 2, dass die Lacke basierend auf den erfindungsgemäßen Dispersionen aus den Beispielen 5 und 6 dem nicht erfindungsgemäßen Vergleichslack aus Beispiel 7 bei sehr guter Filmoptik und Trocknung in der Härte, der Lösemittelbeständigkeit und insbesondere der Wasserfestigkeit deutlich überlegen sind.

### Beispiel 9 (erfindungsgemäß)

In einem 15 l-Reaktionsgefäß mit Rühr-, Kühl- und Heizvorrichtung wurden 600 g Dipropylenglykoldimethylether und 878 g Propylenglykol-n-Butylether vorgelegt und auf 138°C aufgeheizt. Bei dieser Temperatur gibt man eine Lösung aus 45 g Di-*tert*-butylperoxid in 45 g Propylenglykol-n-Butylether in 20 min zu. Im Anschluss daran dosierte man eine Monomermischung aus 348 g Methylmethacrylat, 724 g Butylmethacrylat, 361 g Butylacrylat, 913 g Isobornylmethacrylat, 255 g.Styrol und 1392 g Hydroxyethylmethacrylat sowie parallel dazu eine Lösung von 87 g Di*-tert-*butylperoxid in 87 g Propylenglykol-n-Butylether bei dieser Temperatur innerhalb von 3 Stunden gleichmäßig zu. Man hielt 10 min bei dieser Temperatur und dosierte anschließend eine Lösung von 130 g Di-*tert*-butylperoxid in 130 g Propylenglykol-n-Butylether innerhalb von 1 Stunde 50 min sowie 20 min nach Beginn dieser Peroxiddosierung eine Monomermischung aus 348 g Methylmethacrylat, 724 g Butylmethacrylat, 361 g Butylacrylat, 913 g Isobornylmethacrylat, 255 g Styrol und 1392 g Hydroxyethylmethacrylat parallel bei dieser Temperatur innerhalb von 1 Stunden 30 min gleichmäßig zu, so dass Peroxid- und Monomerdosierung zeitgleich beendet waren. Man hielt die Mischung 30 min bei 138°C und dosierte anschließend eine Mischung aus 439 g Methylmethacrylat, 408 g Butylacrylat, 734 g Hydroxyethylmethacrylat und 326 g Acrylsäure sowie parallel dazu eine Lösung von 45 g Di*-tert-*butylperoxid in 60 g Propylenglykol-n-butylether in 90 min zu. Nach einer weiteren Stunde Rühren bei 138°C wurde die Polymerlösung abgekühlt.

In einem Dispergierkessel wurden dann 2600 g der obigen Polymerlösung auf 90° bis 100°C aufgeheizt, 153,6 g Triethanolamin zugegeben, homogenisiert und mit 2500 g Wasser dispergiert. Es wurde ein in Wasser dispergiert vorliegendes Copolymerisat (P) mit folgenden Daten erhalten:

| | |
|---|---|
| OH-Gehalt (100 %ig) = | 4,5 %, |
| Säurezahl (100 %ig) = | 23 mg KOH/g, |
| Festkörpergehalt = | 44,2 %, |
| Viskosität = | ca. 2500 mPas (23°C, Schergefälle 40 s⁻¹), |
| pH-Wert (10 %ig in Wasser) = | 7,4, |
| Neutralisationsgrad = | 105 %. |

Die Dispersion weist eine mittlere Teilchengröße von ca. 125 nm auf.

Ein Schwarzlack erhältlich durch Anreiben dieser Bindemittel-Dispersion mit einer schwarzen Pigment-Slurry und Bayhydur® VP LS 2319 im Vernetzungsverhältnis NCO : OH = 1,5 : 1 zeigt eine exzellente Filmoptik (Glanz = 87 im 20°-Winkel; Haze < 20), eine Pendelhärte von 199 s und sehr gute Beständigkeiten gegen Wasser, Lösemittel und Chemikalien.

### Beispiel 10 (nicht erfindungsgemäB)

In einem 6 1-Reaktionsgefäß mit Rühr-, Kühl- und Heizvorrichtung wurden 515 g eines hydrophoben Polyacrylatharzes (Desmophen® A 160, Bayer AG, Leverkusen, DE), 60 %ig gelöst in Solvent Naphtha® 100 (Fa. Exxon Chemie, Esso Deutschland GmbH, DE), mit einem OH-Gehalt (100 %ig) von 2,6 %, einer Säurezahl (100 %ig) von 5 mg KOH/g und einem mittleren Molekulargewicht Mₙ von 4800 g/mol, zusammen mit 172 g Butylglykol vorgelegt und auf 138°C aufgeheizt. Bei dieser Temperatur gab man eine Lösung aus 8 g Di-*tert*-butylperoxid in 8 g Butylglykol in 20 min zu. Im Anschluss daran dosierte man eine Mischung aus 392 g Methylmethacrylat, 251,7 g Butylacrylat und 195 g Hydroxyethylmethacrylat sowie parallel dazu eine Lösung von 13 g Di-*tert*-butylperoxid in 15 g Butylglykol bei dieser Temperatur innerhalb von 3 Stunden zu. Man hielt 10 min bei dieser Tem peratur und dosiert anschließend eine Lösung von 19,5 g Di-*tert*-butylperoxid in 19,5 g Butylglykol innerhalb von 1 Stunde 50 min sowie 20 min nach Beginn dieser Peroxiddosierung eine Monomermischung aus 392 g Methylmethacrylat, 251,8 g Butylacrylat und 195 g Hydroxyethylmethacrylat parallel bei dieser Temperatur innerhalb von 1 Stunden 30 min gleichmäßig zu, so dass Peroxid- und Monomerdosierung zeitgleich beendet waren. Man hielt die Mischung 30 min bei 138°C und dosierte anschließend eine Mischung aus 128 g Methylmethacrylat, 100 g Butylacrylat, 180 g Hydroxyethylmethacrylat und 58 g Acrylsäure sowie parallel dazu eine Lösung von 8 g Di-*tert*-butylperoxid in 20 g Butylglykol in 90 min zu. Nach einer weiteren Stunde Rühren bei 138°C wurde auf 90°C abgekühlt, 130,5 g Dimethylethanolamin zugegeben, homogenisiert und in 2380 g Wasser dispergiert.

Es wurde ein in Wasser dispergiert vorliegendes Copolymerisat (P) mit folgenden Daten erhalten:

| | |
|---|---|
| OH-Gehalt (100 %ig) = | 3,3 %, |
| Säurezahl (100 %ig) = | 20 mg KOH/g, |
| Festkörpergehalt = | 49,5 %, |
| Viskosität = | ca.1700 mPas (23°C, Schergefälle 40 s⁻¹). |
| pH-Wert (10 %ig in Wasser) = | 7,5, |
| Neutralisationsgrad = | 105 %. |

Die Dispersion weist eine mittlere Teilchengröße von ca.155 nm auf.

Ein mit dieser Bindemitteldispersion gemäß Beispiel 3 formulierter pigmentierter Decklack zeigt zwar sehr gute Filmoptik, hat aber deutliche Schwächen in der Kleb- und Staubfrei-Trocknung.

### Beispiel 11 (nicht erfindungsgemäß)

In einem 6 1-Reaktionsgefäß mit Rühr-, Kühl- und Heizvorrichtung wurden 515 g eines hydrophoben Polyacrylatharzes (Desmophen® A 160, Bayer AG, Leverkusen, DE), 60 %ig gelöst in Solvent Naphtha® 100 (Fa. Exxon Chemie, Esso Deutschland GmbH, DE), mit einem OH-Gehalt (100 %ig) von 2,6 %, einer Säurezahl (100%ig) von 5 mg KOH/g und einem mittleren Molekulargewicht Mₙ von 4800 g/mol, zusammen mit 180 g Propylenglykol-n-Butylether vorgelegt und auf 138°C aufgeheizt. Bei dieser Temperatur gab man eine Lösung aus 8 g Di-*tert*-butylperoxid in 8 g Propylenglykol-n-Butylether in 20 min zu. Im Anschluss daran dosierte man eine Monomermischung aus 67,5 g Methylmethacrylat, 262,7 g Butylmethacrylat, 312,5 g Isobornylmethacrylat und 195 g Hydroxyethylmethacrylat sowie parallel dazu eine Lösung von 13 g Di-*tert*.-butylperoxid in 13 g Propylenglykol-n-Butylether bei dieser Temperatur innerhalb von 3 Stunden gleichmäßig zu. Man hielt 10 min bei dieser Temperatur und dosierte anschließend eine Lösung von 19,5 g Di-*tert*-butylperoxid in 19,5 g Propylenglykol-n-Butylether innerhalb von 1 Stunde 50 min sowie 20 min nach Beginn dieser Peroxiddosierung eine Monomermischung aus 67,5 g Methylmethacrylat, 262,8 g Butylmethacrylat, 312,5 .g Isobornylmethacrylat und 195 g Hydroxyethylmethacrylat parallel bei dieser Temperatur innerhalb von 1 Stunden 30 min gleichmäßig zu, so dass Peroxid- und Monomerdosierung zeitgleich beendet waren. Man hielt die Mischung 30 min bei 138°C und dosierte anschließend eine Mischung aus 127,5 g Methylmethacrylat, 100 g Butylacrylat, 180 g Hydroxyethylmethacrylat und 60 g Acrylsäure sowie parallel dazu eine Lösung von 8 g Di-*tert*-butylperoxid in 15 g Solvent Naphtha® 100 in 90 min zu. Nach einer weiteren Stunde Rühren bei 138°C wurde die Polymerlösung auf 90° bis 100°C abgekühlt, mit 77,9 g Dimethylethanolamin versetzt, homogenisiert und mit 2900 g Wasser dispergiert. Es wurde ein in Wasser dispergiert vorliegendes Copolymerisat (P) mit folgenden Daten erhalten:

| | |
|---|---|
| OH-Gehalt (100 %ig) = | 3,3 %, |
| Säurezahl (100 %ig) = | 21 mg KOH/g, |
| Festkörpergehalt = | 42,6 %, |
| Viskosität = | ca.1400 mPas (23°C, Schergefälle 40 s⁻¹), |
| pH-Wert (10 %ig in Wasser) = | 8,3, |
| Neutralisationsgrad = | 105%. |

Die Dispersion weist eine mittlere Teilchengröße von ca. 160 nm auf.

Ein mit dieser Bindemitteldispersion gemäß Bsp. 3 formulierter pigmentierter Decklack zeigt zwar schnelle Staub- und Klebfrei-Trocknung und hohe Härte, aber schlechte Wasserfestigkeit (nur 1 d ohne Befund) und mit einem Glanz von 42 im 20°-Winkel unakzeptable Filmoptik.

## Patentansprüche

1. Wässrige Bindemittel-Dispersionen, enthaltend mindestens ein Carboxyl- und/oder Carboxylatgruppen aufweisendes Copolymer (P), wobei das Copolymer (P) Struktureinheiten carboxylfreier Acrylsäure- und/oder Methacrylsäureester mit cycloaliphatischer Struktur enthält und mindestens 25 mol-% der Carbonsäuregruppen des Copolymers (P) in der Dispersion mit Triethanolamin neutralisiert vorliegen.

2. Wässrige Bindemittel-Dispersion gemäß Anspruche 1, **dadurch gekennzeichnet, dass** mindestens 40 mol-% der Carbonsäuregruppen des Copolymers (P) in der Dispersion mit Triethanolamin neutralisiert vorliegen.

3. Wässrige Bindemittel-Dispersion gemäß Anspruche 1 oder 2, **dadurch gekennzeichnet, dass** das Copolymere (P), aus der Gruppe der Monomere (M) umfassend
(M1) 10 bis 50 Gew.-% cycloaliphatische Ester der Acrylsäure und/oder Methacrylsäue oder deren Mischungen,
(M2) 20 bis 60 Gew.-% hydroxyfunktionelle radikalisch polymerisierbare Monomere,
(M3) 1 bis 5 Gew.-% carboxylfunktionelle radikalisch polymerisierbare Monomere,
(M4) 0 bis 10 Gew.-% Phosphat- /Phosphonatgruppen oder Sulfonsäure-/Sulfonatgruppen enthaltende radikalisch polymerisierbare und
(M5) 10 bis 60 Gew.-% hydoxy- und carboxylgruppenfreie (Meth)-acrylsäureester mit C₁ bis C₁₈-Kohlenwasserstoffresten im Alkoholteil und/oder Vinylaromaten und/oder Vinylester,
hergestellt ist, wobei die Summen der Komponenten sich zu 100 Gew.-% addieren.

4. Wässrige Bindemittel-Dispersion gemäß Anspruch 3, **dadurch gekennzeichnet, dass** Monomere (M1) Isobornylacrylat und/oder Isobornylmethacrylat sind.

5. Wässrige Bindemittel-Dispersion gemäß einem oder mehreren der Ansprüche 1 bis 4, **dadurch gekennzeichnet, dass** der OH-Gehalt der 100 %igen Copolymerisate (P) 3,5 bis 7,5 Gew.-%beträgt.

6. Wässrige Bindemittel-Dispersion gemäß einem oder mehreren der Ansprüche 1 bis 5, **dadurch gekennzeichnet, dass** die Säurezahl des 100%igen Copolymerisats (P) 15 bis 40 mg KOH/g beträgt.

7. Verfahren zur Herstellung wässriger Bindemittel-Dispersionen gemäß Anspruch 1, **dadurch gekennzeichnet, dass** die Komponenten (M1), (M2), (M3) und (M5) und gegebenenfalls (M4) zu einem Copolymerisat (P) umgesetzt werden und das entstehende Säuregruppen aufweisende Copolymerisat (P) in die wässrige Phase überführt wird, wobei vor oder während der Dispergierung mindestens 25 mol-% der Carboxylgruppen mit Triethanolamin neutralisiert werden.

8. Wässrige Beschichtungsmittel enthaltend Bindemittel-Dispersionen gemäß Anspruch 1 sowie mindestens einen Vernetzer.

9. Wässrige Beschichtungsmittel gemäß Anspruch 8, **dadurch gekennzeichnet, dass** der Vernetzer ein Polyisocyanat-Vernetzer mit freien NCO-Gruppen ist.

10. Verwendung wässriger Beschichtungsmittel gemäß Anspruch 8 zur Lackierung von Substraten.

11. Verwendung wässriger Beschichtungsmittel gemäß Anspruch 8 zur Herstellung von Grundierungen, Füller, pigmentierter oder transparenter Decklacke, Klarlacke und Hochglanzlacke sowie Einschichtlacke.

12. Substrate, beschichtet mit Beschichtungsmitteln, enthaltend mindestens eine Bindemittel-Dispersion gemäß Anspruch 1.

## Claims

1. Aqueous binder dispersions comprising at least one copolymer (P) containing carboxyl and/or carboxylate groups, the copolymer (P) containing structural units of carboxyl-free acrylic and/or methacrylic esters with a cycloaliphatic structure, and at least 25 mol% of the carboxylic acid groups of the copolymer (P) in the dispersion being present in triethanolamine-neutralized form.

2. Aqueous binder dispersion according to Claim 1, **characterized in that** at least 40 mol% of the carboxylic acid groups of the copolymer (P) in the dispersion are present in triethanolamine-neutralized form.

3. Aqueous binder dispersion according to Claim 1 or 2, **characterized in that** the copolymer (P) is prepared from the group of the monomers (M) encompassing
(M1) 10 to 50% by weight of cycloaliphatic esters of acrylic acid and/or methacrylic acid or mixtures thereof,
(M2) 20 to 60% by weight of hydroxyl-functional free-radically polymerizable monomers,
(M3) 1 to 5% by weight of carboxyl-functional free-radically polymerizable monomers,
(M4) 0 to 10% by weight of free-radically polymerizable [lacuna] containing phosphate/phosphonate groups or sulphonic acid/sulphonate groups, and
(M5) 10 to 60% by weight of hydroxyl- and carboxyl-free (meth)acrylic esters with C₁ to C₁₈ hydrocarbon radicals in the alcohol moiety and/or vinylaromatics and/or vinyl esters,
the sums of the components adding up to 100% by weight.

4. Aqueous binder dispersion according to Claim 3, **characterized in that** monomers (M1) are isobornyl acrylate and/or isobornyl methacrylate.

5. Aqueous binder dispersion according to one or more of Claims 1 to 4, **characterized in that** the OH content of the copolymers (P) in 100% form is 3.5 to 7.5% by weight.

6. Aqueous binder dispersion according to one or more of Claims 1 to 5, **characterized in that** the acid number of the copolymers (P) in 100% form is 15 to 40 mg KOH/g.

7. Process for preparing aqueous binder dispersions according to Claim 1, **characterized in that** components (M1), (M2), (M3) and (M5) and, if desired, (M4) are reacted to give a copolymer (P) and the resultant copolymer (P), containing acid groups, is transferred to the aqueous phase, at least 25 mol% of the carboxyl groups being neutralized with triethanolamine before or during dispersion.

8. Aqueous coating materials comprising binder dispersions according to Claim 1 and also at least one crosslinker.

9. Aqueous coating materials according to Claim 8, **characterized in that** the crosslinker is a polyisocyanate crosslinker having free NCO groups.

10. Use of aqueous coating materials according to Claim 8 for coating substrates.

11. Use of aqueous coating materials according to Claim 8 for preparing primers, surfacers, pigmented or transparent topcoat materials, clearcoat materials and high-gloss coating materials, and also single-coat coating materials.

12. Substrates coated with coating materials comprising at least one binder dispersion according to Claim 1.

## Revendications

1. Dispersions aqueuses de liants, contenant au moins un copolymère (P) présentant des groupes carboxyle et/ou carboxylate, dans lesquelles le copolymère (P) contient des motifs structurels d'esters de l'acide acrylique et/ou de l'acide méthacrylique exempts de carboxyles et ayant une structure cycloaliphatique et au moins 25% molaires des groupes acides carboxyliques du copolymère (P) sont présents dans la dispersion sous forme neutralisée avec de la triéthanolamine.

2. Dispersion aqueuse de liant selon la revendication 1, **caractérisée en ce que** 40% molaires au moins des groupes acides carboxyliques du copolymère (P) sont présents dans la dispersion sous forme neutralisée avec de la triéthanolamine.

3. Dispersion aqueuse de liant selon la revendication 1 ou la revendication 2, **caractérisée en ce que** le copolymère (P) est préparé à partir du groupe de monomères (M) comprenant
(M1) de 10 à 50% en poids d'esters cycloaliphatiques de l'acide acrylique et/ou de l'acide méthacrylique ou de mélanges de ceux-ci,
(M2) de 20 à 60% en poids de monomères à fonctionnalité hydroxyle aptes à une polymérisation radicalaire,
(M3) de 1 à 5% en poids de monomères à fonctionnalité carboxyle aptes à une polymérisation radicalaire,
(M4) de 0 à 10% en poids de monomères contenant des groupes phosphate/ phosphonate ou des groupes acide sulfonique/sulfonate et aptes à une polymérisation radicalaire, et
(M5) de 10 à 60% en poids d'esters de l'acide (méth)acrylique exempts de groupes hydroxyle et carboxyle avec des résidus d'hydrocarbures en C₁ à C₁₈ dans la fraction alcool et/ou des aromatiques vinyliques et/ou des esters de vinyle,
les sommes des composants étant égales à 100% en poids.

4. Dispersion aqueuse de liant selon la revendication 3, **caractérisée en ce que** les monomères (M1) sont l'acrylate d'isobornyle et/ou le méthacrylate d'isobornyle.

5. Dispersion aqueuse de liant selon ou plusieurs l'une des revendications 1 à 4, **caractérisée en ce que** la teneur en groupes OH du copolymère (P) à 100% se situe dans la plage de 3,5 à 7,5%.

6. Dispersion aqueuse de liant selon ou plusieurs l'une des revendications 1 à 5, **caractérisée en ce que** l'indice d'acide du copolymère (P) à 100% se situe dans la plage de 15 à 40 mg de KOH par gramme.

7. Procédé de préparation de dispersions aqueuses de liants selon la revendication 1, **caractérisé en ce que** l'on fait réagir les composants (M1), (M2), (M3) et (M5) et le cas échéant (M4) pour obtenir un copolymère (P) et on convertit le copolymère (P) présentant des groupes acides ainsi obtenu en phase aqueuse, au moins 25% molaires des groupes carboxyles étant neutralisés avec de la triéthanolamine avant ou pendant l'opération de dispersion.

8. Agents de revêtement aqueux contenant des dispersions de liants selon la revendication 1 ainsi qu'au moins un agent de réticulation.

9. Agents de revêtement aqueux selon la revendication 8, **caractérisés en ce que** l'agent de réticulation est un agent de réticulation à base de polyisocyanate avec des groupes NCO libres.

10. Utilisation d'agents de revêtement aqueux selon la revendication 8 pour peindre des substrats.

11. Utilisation d'agents de revêtement aqueux selon la revendication 8 pour réaliser des primaires, des extendeurs, des laques de finition pigmentées ou transparentes, des laques claires et des laques brillantes ainsi que des laques monocouches.

12. Substrats revêtus avec des agents de revêtement contenant au moins une dispersion de liant selon la revendication 1.
